(19) Europäisches Patentamt
European Patent Office
Office européen des brevets

(11) Veröffentlichungsnummer: **0 147 675**
**A2**

# (12) EUROPÄISCHE PATENTANMELDUNG

(21) Anmeldenummer: 84114660.8

(22) Anmeldetag: 03.12.84

(51) Int. Cl.[4]: A 01 N 55/04
//(A01N55/04, 43:36, 43:08, 37:36, 31:08, 31:02)

(30) Priorität: 20.12.83 CH 6759/83

(43) Veröffentlichungstag der Anmeldung:
10.07.85 Patentblatt 85/28

(84) Benannte Vertragsstaaten:
BE CH DE FR GB IT LI NL

(71) Anmelder: F. HOFFMANN-LA ROCHE & CO. Aktiengesellschaft

CH-4002 Basel(CH)

(72) Erfinder: Müller, Peter Adolf Franz, Dr.
Wasserfurrenstrasse 13
CH-8600 Dübendorf(CH)

(72) Erfinder: Roth, Willy, Dr.
Hardstrasse 24
CH-4802 Strengelbach(CH)

(74) Vertreter: Aschert, Hubert et al,
Grenzacherstrasse 124 Postfach 3255
CH-4002 Basel(CH)

## (54) Biocide Zusammensetzungen.

(57) Es werden biocide Zusammensetzungen beschrieben, und zwar Tricyclohexylzinnhydroxyd enthaltende Konzentrate und daraus durch Verdünnung herstellbare Präparate, welche das Tricyclohexylzinnhydroxyd im Gemisch mit einem Thiol oder einem Dithiol enthalten. Ferner wird ein Verfahren zur Herstellung dieser Zusammensetzungen, sowie deren Verwendung beschrieben.

Croydon Printing Company Ltd

F.HOFFMANN-LA ROCHE & CO.Aktiengesellschaft, Basel/Schweiz

RAN 6101/110



# Biocide Zusammensetzungen

Die vorliegende Erfindung bezieht sich auf biocide Zusammensetzungen, u. zw. auf ein Biocidkonzentrat und auf ein daraus herstellbares Präparat; insbesondere bezieht sich die vorliegende Erfindung auf ein Tricyclohexylzinnhydroxyd enthaltendes Konzentrat und auf ein daraus durch Verdünnung herstellbares Präparat.

Tricyclohexylzinnhydroxyd (Cyhexatin) weist bekanntlich, wie andere biocide Organozinnverbindungen, bei normalen Temperaturen eine geringe Löslichkeit in Wasser und organischen Lösungsmitteln auf. Es treten somit bei der Formulierung von Tricyclohexylzinnhydroxyd beträchtliche Schwierigkeiten auf, und es liegen bereits vielfältige Vorschläge vor, durch verschiedene Massnahmen diese Schwierigkeiten zu beheben. Insbesondere wurde auf verschiedene Weise versucht, Cyhexatin enthaltende emulgierbare Konzentrate zu formulieren. Bisher ist es jedoch nicht gelungen, zufriedenstellende Produkte herzustellen; die bisher bekanntgewordenen Produkte weisen entweder eine ungenügende biocide Wirkung auf oder sie sind im Hinblick auf ihre Phytotoxizität mit Nachteilen behaftet.

As/28.9.84

Erfindungsgemäss wurde nun ein Tricyclohexylzinnhydroxyd enthaltendes Konzentrat und ein daraus durch Verdünnung herstellbares Präparat geschaffen, welches die obigen Nachteile nicht aufweist, phytotoxisch keine Probleme bietet, eine zufriedenstellende Wirkung aufweist und ausserdem leicht handhabbar ist.

Das erfindungsgemässe Tricyclohexylzinnhydroxyd enthaltende Konzentrat bzw. das daraus durch Verdünnung herstellbare Präparat ist dadurch gekennzeichnet, dass das Tricyclohexylzinnhydroxyd im Gemisch mit einem Thiol oder einem Dithiol vorliegt.

Als Thiole bzw. Dithiole sind hierbei die verschiedensten flüssigen Mercaptanverbindungen verwendbar.

Insbesondere eignen sich für den vorliegenden Zweck Thiole bzw. Dithiole der Formel

$$X-(CH_2)_n-SH \qquad I$$

worin X Wasserstoff und n eine ganze Zahl von 3-18 bedeutet, oder

X die Mercaptogruppe und n eine ganze Zahl von 3-5 bedeutet, oder

X eine gegebenenfalls durch 1-3 nieder Alkyl-, nieder Alkoxy-, Nitro- oder Sulfongruppen oder Halogenatome substituierte Phenylgruppe und n 0, 1 oder 2 bedeutet, oder

X einen Furfurylrest und n 0 bedeutet, oder

X eine Gruppe -COOR- und n 1 bedeutet, wobei R Wasserstoff oder niederes Alkyl darstellt, oder

X N-Pyrrolidonyl und n 2 bedeutet, oder

X Hydroxy oder niederes Alkoxy und n 2 bedeutet.

Unter niederen Alkylgruppen sind hierbei gerade oder verzweigte Alkylgruppen mit 1-6 Kohlenstoffatomen, wie Methyl, Aethyl, Propyl, Isopropyl, Pentyl und Hexyl, insbesondere solche mit 1-3 Kohlenstoffatomen, zu verstehen. Niedere Alkoxygruppen sind solche, deren Alkylanteil der eben gegebenen Definition für niederes Alkyl entspricht. Die Gruppe $-(CH_2)_n-$ in der obigen Formel stellt Alkylenreste dar, welche geradlinig oder verzweigt sein können.

Vertreter derartiger Thiole bzw. Dithiole:

| X | $-(CH_2)_n-$ | Vertreter |
|---|---|---|
| H | $-(CH_2)_3-$ | Propylmercaptan |
| | $-(CH_2)_6-$ | 1-Hexanthiol |
| | $-(CH_2)_8-$ | 1-Octanthiol |
| | $-(CH_2)_{10}-$ | 1-Decanthiol |
| | $-(CH_2)_{12}-$ | 1-Dodecanthiol |
| | $-(CH_2)_{16}-$ | 1-Hexadecanthiol |
| | $-(CH_2)_{18}-$ | 1-Octadecanthiol |
| SH | $-(CH_2)_3-$ | 1,2-Propandithiol |
| | | 1,3-Propandithiol |
| | $-(CH_2)_5-$ | 1,5-Pentandithiol |
| gegebenenfalls substituiertes Phenyl | (n = 0) | Thiophenol |
| | | 4-Methoxythiophenol |
| | $-(CH_2)-$ | Benzylmercaptan |
| | $-(CH_2)_2-$ | 2-Phenyläthylmercaptan |
| (Furfuryl) | (n = 0) | Furfurylmercaptan |

| | | |
|---|---|---|
| -COOR (R = H oder niederes Alkyl) | $-CH_2-$<br>$-CH_2-$<br>$-CH_2-$ | Thioglycolsäure<br>Thioglycolsäure-methylester<br>Thioglycolsäure-äthylester |
| 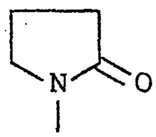 | $-(CH_2)_2-$ | N-(2-Mercapto)-äthylpyrrolidon |
| -OR (R = H oder niederes Alkyl) | $-(CH_2)_2-$ | Mercaptoäthanol, Mercaptoäthanol-alkyläther |

Ein besonders bevorzugter Vertreter eines Thiols der Formel I ist das 1-Dodecanthiol.

Weitere bevorzugte Vertreter von Thiolen bzw. Dithiolen der Formel I sind das Furfurylmercaptan, das 1-Decanthiol, das 1,2-Propandithiol, das Benzylmercaptan und die Thioglycolsäure bzw. der Methylester und der Aethylester der Thioglycolsäure.

Im Falle eines Thiols beträgt das molare Verhältnis von Tricyclohexylzinnhydroxyd und dem Thiol zweckmässig etwa 1:1 oder es liegt das Thiol in einem Ueberschuss bis zu etwa 20% über das Verhältnis von 1:1 vor.

Im Falle eines Dithioles beträgt das molare Verhältnis von Tricyclohexylzinnhydroxyd und dem Dithiol zweckmässig etwa 1:0,5 oder es liegt das Dithiol in einem Ueberschuss bis zu 20% über dieses Verhältnis vor.

Das erfindungsgemässe Konzentrat bzw. Präparat kann zweckmässig zusätzlich noch ein organisches Lösungsmittel enthalten. Als organische Lösungsmittel kommen hierbei in

Frage: aromatische Kohlenwasserstoffe, wie Benzol, Toluol, Xylol und Alkylnaphthaline; chlorierte aromatische Kohlenwasserstoffe, wie Chlorbenzole; Chloräthylene und Methylenchlorid; aliphatische Kohlenwasserstoffe, wie Cyclohexan und Paraffine, z.B. Erdölfraktionen; Alkohole, wie Butanol und Glycol, sowie deren Aether und Ester; Ketone, wie Methyläthylketon, Methylisobutylketon und Cyclohexanon.

Die erfindungsgemässen Konzentrate bzw. Präparate können ferner noch Emulgatoren, wie beispielsweise Alkylaryloxyäthoxylate, z.B. Nonylphenoläthoxylat, und Alkylarylsulfonsäuresalze, z.B. Calciumbenzoldodecylsulfonat, enthalten. Ferner können die erfindungsgmeässen Konzentrate bzw. Präparate noch übliche Formulierungshilfsstoffe, wie Epoxyde, UV-Absorber, Geruchsstoffe, Farbstoffe und dergleichen enthalten.

Weiterhin können die erfindungsgemässen Konzentrate bzw. Präparate noch weitere biocid wirksame Substanzen, beispielsweise weitere Acarizide, und Fungizide oder Insektizide enthalten.

Die erfindungsgemässen Konzentrate können in einfacher Weise dadurch erhalten werden, dass man das Tricyclohexylzinnhydroxyd mit dem Thiol oder Dithiol der Formel I, gegebenenfalls unter Zusatz eines organischen Lösungsmittels, oder weiterer Zusatzstoffe vermischt.

Das dabei erhaltene emulgierbare Konzentrat kann in einfacher Weise durch Verdünnen mit Wasser in eine wässrige Emulsion übergeführt werden. Auf diese Weise erhält man Formulierungen, welche etwa 0,05 bis 0,2% Wirkstoff enthalten.

Das erfindungsgemässe Präparat kann aber auch durch Verdünnung mit einem Lösungsmittel wie 1,1,1-Trichloräthan, in sog. "Ultra-Low-Volume" Lösungen übergeführt werden, welche zur direkten Applikation, beispielsweise vom Flugzeug aus, geeignet sind.

In den folgenden Beispielen ist die Zusammensetzung verschiedener erfindungsgemässer Konzentrate angegeben, welche in einfacher Weise durch Verdünnen in direkt verwendbare Formulierungen übergeführt werden können.

Beispiel 1

| | | g/l |
|---|---|---|
| Tricyclohexylzinnhydroxyd | | 170 |
| n-Dodecylmercaptan | | 90 |
| Rizinus öl-(20)-äthoxylat | | 40 |
| Ca-Dodecylbenzolsulfonat | | 20 |
| Alkylbenzol | ad | 1000 ml |

Beispiel 2

| | | g/l |
|---|---|---|
| Tricyclohexylzinnhydroxyd | | 250 |
| Furfurylmercaptan | | 92 |
| Nonylphenol-(10)-äthoxylat | | 50 |
| Ca-Dodecylbenzolsulfonat | | 25 |
| Alkylbenzol | ad | 1000 ml |

Beispiel 3

| | | g/l |
|---|---|---|
| Tricyclohexylzinnhydroxyd | | 200 |
| 1-Decanthiol | | 115 |
| Tristyrylphenol-(18)-äthoxylat | | 100 |
| Ca-Dodecylbenzolsulfonat | | 25 |
| Cyclohexanon | ad | 1000 ml |

## Beispiel 4

| | | g/l |
|---|---|---|
| Tricyclohexylzinnhydroxyd | | 100 |
| 1,2-Propandithiol | | 18 |
| Nonylphenol-(12)-äthoxylat | | 75 |
| Ca-Dodecylbenzolsulfonat | | 25 |
| Xylol | ad | 1000 ml |

## Beispiel 5

| | | g/l |
|---|---|---|
| Tricyclohexylzinnhydroxyd | | 150 |
| Thioglycolsäureäthylester | | 58 |
| Rizinusöl-(20)-äthoxylat | | 50 |
| Dodecylbenzolsulfonsäure-isopropylaminsalz | | 25 |
| Toluol | ad | 1000 ml |

## Beispiel 6

| | | g/l |
|---|---|---|
| Tricyclohexylzinnhydroxyd | | 250 |
| Benzylmercaptan | | 98 |
| Rizinusöl-(20)-äthoxylat | | 40 |
| Ca-Dodecylbenzolsulfonat | | 20 |
| Cumol | ad | 1000 ml |

## Patentansprüche

1. Tricyclohexylzinnhydroxyd enthaltendes Konzentrat und daraus durch Verdünnung herstellbares Präparat, dadurch gekennzeichnet, dass das Tricyclohexylzinnhydroxyd im Gemisch mit einem Thiol oder einem Dithiol vorliegt.

2. Konzentrat bzw. Präparat nach Anspruch 1, dadurch gekennzeichnet, dass das Thiol bzw. Dithiol der Formel

$$X-(CH_2)_n-SH \qquad I \quad .$$

entspricht,

worin X Wasserstoff und n eine ganze Zahl von 3-18 bedeutet, oder

X die Mercaptogruppe und n eine ganze Zahl von 3-5 bedeutet, oder

X eine gegebenenfalls durch 1-3 nieder Alkyl-, nieder Alkoxy-, Nitro- oder Sulfongruppen oder Halogenatome substituierte Phenylgruppe und n 0, 1 oder 2 bedeutet, oder

X einen Furfurylrest und n 0 bedeutet, oder

X eine Gruppe -COOR- und n 1 bedeutet, wobei R Wasserstoff oder niederes Alkyl darstellt, oder

X N-Pyrrolidonyl und n 2 bedeutet, oder

X Hydroxy oder niederes Alkoxy und n 2 bedeutet.

3. Konzentrat bzw. Präparat nach Anspruch 1 oder 2, dadurch gekennzeichnet, dass das Thiol 1-Dodecanthiol ist.

4. Konzentrat bzw. Präparat nach Anspruch 1 oder 2, dadurch gekennzeichnet, dass das Thiol bzw. Dithiol Furfurylmercaptan; 1-Decanthiol; 1,2-Propanthiol; Benzylmercaptan oder Thioglycolsäureäthylester ist.

5. Konzentrat bzw. Präparat nach einem der Ansprüche 1-4, dadurch gekennzeichnet, dass das molare Verhältnis von Tricyclohexylzinnhydroxyd und dem Thiol etwa 1:1 beträgt oder das Thiol in einem Ueberschuss bis etwa 20% über dieses Verhältnis vorliegt.

6. Konzentrat bzw. Präparat nach Anspruch 1, 2 oder 4, dadurch gekennzeichnet, dass das molare Verhältnis von Tricyclohexylzinnhydroxyd und dem Dithiol etwa 1:0,5 beträgt oder das Dithiol in einem Ueberschuss bis zu 20% über dieses Verhältnis vorliegt.

7. Konzentrat bzw. Präparat nach einem der Ansprüche 1-6, dadurch gekennzeichnet, dass es zusätzlich ein organisches Lösungsmittel enthält.

8. Durch Verdünnung eines Konzentrates gemäss einem der Ansprüche 1-7 erhältliches Präparat, dadurch gekennzeichnet, dass es das Tricyclohexylzinnhydroxyd in einer Menge von etwa 0,05 bis 0,2 Gew.-%, bezogen auf die Gesamtmenge des Präparates, enthält.

9. Präparat nach Anspruch 8, dadurch gekennzeichnet, dass das Verdünnungsmittel Wasser ist.

10. Verfahren zur Herstellung eines Konzentrates bzw. Präparates nach einem der Ansprüche 1-9, dadurch gekennzeichnet, dass man Cyhexatin mit einem Diol bzw. Dithiol der Formel I und gegebenenfalls einem weiteren organischen Lösungsmittel vermischt und dass man gegebenenfalls das so erhaltene Konzentrat mit einem Verdünnungsmittel verdünnt.

11. Verwendung eines Konzentrates bzw. Präparates nach einem der Ansprüche 1-9 für die Herstellung von bioiciden Präparaten bzw. als biocides Präparat.

***